# EUROPEAN PATENT SPECIFICATION

(11) **EP 2 000 363 B1**
(45) Date of publication and mention of the grant of the patent: **10.12.2014**
(21) Application number: 08005037.0
(22) Date of filing: 18.03.2008
(51) Int. Cl.: B60R 11/00, B60R 5/04

(54) **Support structure of floor panel of luggage room**
Stützstruktur für die Bodenplatte eines Gepäckraums
Structure de support du panneau de plancher d'un coffre à bagages

(30) Priority: 04.06.2007 JP 2007148282
(43) Date of publication of application: 10.12.2008
(73) Proprietor: Mitsubishi Jidosha Kogyo Kabushiki Kaisha, Tokyo (JP)
(72) Inventor: Miyazaki, Masahide c/o Mitsubishi Jidosha Kogyo K.K., Tokyo (JP)
(74) Representative: Vossius & Partner

(56) References cited:
- WO-A2-03/080394
- FR-A1- 2 885 571
- FR-A1- 2 891 232
- US-A1- 2006 016 840
- US-B1- 6 290 277

## Description

### BACKGROUND OF THE INVENTION

The present invention relates to a support structure of a floor panel of a luggage room located at a rear portion of a vehicle.

As well known, in a type of vehicle which uses, as a luggage room, a vehicle room space located more rearward than a rearmost row seat, it is generally performed to utilize this space more effectively by dividing the space up and down with a divider board. For example, there is a structure in which a hollowed part is provided in a floor surface of the vehicle rear portion as a spare tire housing part, the upper side of this hollowed part is covered with a divider board which is set in a height position substantially flush with the floor surface, and the space above this divider board can be utilized as a trunk room. This structure is widely applied to a rear luggage room for a passenger vehicle which has little sufficient space. Further, in a one-box type car, it is also performed to divide a midway portion in the up and down direction of rear space of the rearmost row seat up and down with a so-called tonneau cover in order to utilize the rear space.

In case that the luggage room space is thus divided up and down with the divider board, if it is possible to adjust the height of the divider board by changing the position in the up-down direction in accordance with the shape or size of a luggage to be accommodated in each compartmental space, or so that the luggage room floor surface can be flattened or so that a flat floor can be realized when the rearmost row seat is collapsed, effective utilization of the space according to the kind of luggage is possible and usability of the luggage room becomes good, whereby convenience can be heightened.

Therefore, in Patent Document 1, the following constitution has been disclosed: a pin member protruding in the vehicle width direction is provided for a divider board which divides luggage room space up and down; an upper groove part and a lower groove part which engage with this pin member, and a coupling groove part which couples the both groove parts are formed in an interior member located in the vehicle width direction; the pin member is engaged with the upper groove part thereby to hold the divider board in a position where the divider board is flattened with the luggage room floor surface; and the pin member is engaged with the lower groove part thereby to move down the position of the divider board and widen the luggage room space.

In Patent Document 2, the following constitution has been disclosed: plural roller elements are provided on a side surface of a divider board which divides luggage space up and down; an upper groove part, a lower groove part and a coupling groove part which couples the both groove parts in which these roller elements can move are formed in an interior member located in the vehicle width direction; and the divider board is slid and moved thereby to locate the roller elements in the upper groove part or the lower groove part through the coupling groove part, whereby the divider board can be moved above the luggage room floor surface.
[Patent Document] JP-A-2005-219702
[Patent Document] US2006/0016840A1

In the constitution disclosed in the Patent Document 1, a rear end of the divider board is held and the divider board is moved behind or in front of the vehicle, whereby the position of the pin member is changed. And, a guide member which moves rotationally so as to open and close an introduction hole to the coupling groove part is arranged. Therefore, in case that there is damage of the guide member due to catching by the leading end of the divider board when the divider board moves or there is some fallen matter on the luggage room floor surface, there is fear that the damage or the fallen matter obstructs opening and closing by the guide member. In case that the divider board is moved, since an operator operates the divider board at the rear position of the vehicle, it is desirable that the constitution of the leading end side of the divider board which is apart from the operator is as simple as possible. Further, in the Patent Document 1, though one pin member engaged with the groove part is provided for one divider board, it sways easily in the vehicle width direction when the divider board is moved. Further, since load of the divider board is directly transmitted to the operator, there is room for improvement in operability.

In the Patent Document 2, the structure in which the position of the divider board is changed up and down by engagement between the groove part and the plural roller members has been described. Herein, since the horizontal portions of the upper groove part and the lower groove part are long in the longitudinal direction of the vehicle, and the both groove parts are connected by the coupling groove part near each center of the upper groove part and the lower groove part, the slide amount in the horizontal direction of the divider board becomes large, so that it is difficult to change the position of the divider board in case that there is no enough space in a rear part of a vehicle body. Further, since the slide amount in the horizontal direction of the divider board is large, it is difficult to move the divider board more downward than the luggage room floor surface.

FR-A-2885571 also shows a luggage room with an adjustable floor plate.

### SUMMARY

It is therefore an object of the invention to provide a support structure of a luggage room floor panel of a vehicle, which has simple constitution and good operability.

In order to achieve the object, according to the invention, there is provided a support structure of a floor panel of a luggage room of a vehicle, the support structure for positioning the floor panel in a upper step position and a lower step position, the support structure comprising:
a pair of first pin members, protruding from both sides of the floor panel in a width direction of the vehicle;
a pair of second pin members, protruding from the sides of the floor panel in the width direction, and disposed at rear side of the first pin members with space; and
guides, respectively formed on both side surfaces of the luggage room which are opposed to the first and second pin members, and adapted to be engaged with at least one of the first pin members and the second pin members thereby to guide the floor panel in a vertical direction, each of the guides including:
   a first guide part, adapted to guide one of the second pin members so that the floor panel can be pivoted, from the lower step position, about one of the first pin members or about a position located at front side of the one of the first pin members;
   a second guide part, adapted to guide the one of the second pin members guided by the first guide part toward rear side of the vehicle;
   a third guide part, adapted to guide the one of the first pin members, when the one of the second pin members is located at a rear end of the second guide part, so that the floor panel can be pivoted about the one of the second pin members; and
   a fourth guide part, adapted to guide the one of the first pin members guided by the third guide part toward front side of the vehicle to arrange the floor panel in the upper step position.

With this configuration, since the first and second pin members, which are spaced in a longitudinal direction of the vehicle, support the floor panel, support stability increases, and the sway in the width direction or in the longitudinal direction can be reduced. Further, the load of the floor panel can be distributed to the first and second pin members, so that support rigidity can be improved by simple constitution. Further, since there is no guide member which opens and closes unlike the conventional constitution, there is no fear that operational disadvantage of the opening and closing part occurs. Therefore, though the constitution is simplified, the up-down operation of the floor panel can be smoothly performed by the pivoting and sliding operations of the pin members. Further, since the floor panel can be pivoted upward from the lower step position, the moving amount in the longitudinal direction of the floor panel can be reduced. Accordingly, this support structure can be applied in the wide range.

Each of the guides may include a fifth guide part, adapted to regulate a position of the one of the second pin members guided by the first guide part. The second guide part may be continuously connected to the fifth guide part and is extended toward rear side and obliquely upper side of the vehicle.

In this case, each of the second pin members can shift in the second guide part smoothly, and the moving operation of the floor panel after the upward pivoting operation of the floor panel from the lower step position becomes smooth, so that operability can be more heightened.

Each of the guides may include a sixth guide part, adapted to regulate a position of the one of the first pin members guided by the third guide part. The fourth guide part may be continuously connected to the sixth guide part.

In this case, each of the first pin members can shift in the fourth guide part smoothly, and the moving operation of the floor panel after the pivoting operation about the second pin members becomes smooth, so that the operability can be more heightened.

The second guide part may be continuously connected to the first guide part.

In this case, the upward pivoting operation from the low step position and the rearward moving operation of the floor panel are smoothly guided in continuity, whereby the operability can be more heightened.

The fourth guide part may be continuously connected to the third guide part.

In this case, the pivoting operation about the second pin members and the moving operation to the upper step position are smoothly guided in continuity, whereby the operability can be more heightened.

The second guide part may include a guide groove defined by a pair of surfaces which are continuously connected to the first guide part and the fifth guide part, respectively and which are opposed to each other.

In this case, by forming the second guide part as the groove, the second pin members can be surely guided. Further, by forming the first guide part and the fifth guide part not as grooves but as only guide surfaces, the both side surfaces of the luggage room are not subjected to more processing than they need, so that processing cost is suppressed. Further, in case that the guide part is constituted not by the groove but by only the surface, the degree of freedom in the second pin member improves thereby to enable the smooth movement of the second pin member, and the both side surfaces of the luggage room are neat and have good appearance.

The fourth guide part may include a guide groove defined by a pair of surfaces which are continuously connected to the third guide part and the sixth guide part, respectively and which are opposed to each other.

In this case, by forming the fourth guide part as the groove, the first pin members can be surely guided. Further, by forming the third guide part and the sixth guide part not as grooves but as only guide surfaces, the both side surfaces of the luggage room are not subjected to more processing than they need, so that processing cost is suppressed. Further, in case that the guide part is constituted not by the groove but by only the surface, the degree of freedom in the first pin member improves thereby to enable the smooth movement of the first pin member, and the both side surfaces of the luggage room are neat and have good appearance.

The support structure may further comprise: an operational part for moving the floor panel in the direction, disposed at a rear portion of the floor panel. The first pin members may be disposed at front portions of the floor panel.

In this case, a leading end of the floor panel does not lower downward at more level than it needs in the upward pivoting operation, and the second pin members can be arranged as to the front as possible. Therefore, the pivoting operation about the pin members can be performed by small force, utilizing the principle of the lever, so that operability can be more heightened.

According to a preferred embodiment, there is provided a support structure of a floor panel of a luggage room of a vehicle, which includes: first pin members protruding from both sides of the floor panel in a width direction; second pin members protruding from the sides of the floor panel and disposed at rear side of the first pin members; and guides respectively formed on both side surfaces of the luggage room which are opposed to the first and second pin members. Each of the guides includes: a first guide part guiding the second pin member so that the floor panel can be pivoted, from the lower step position, about the first pin member or about a position located at front side of the first pin member; a second guide part guiding the second pin member toward rear side of the vehicle; a third guide part guiding the first pin member, when the second pin member is located at a rear end of the second guide part, so that the floor panel can be pivoted about the second pin member; and a fourth guide part guiding the first pin member toward front side of the vehicle to arrange the floor panel in the upper step position.

### BRIEF DESCRIPTION OF THE DRAWINGS

Fig. 1 is a schematically constitutional view of a support structure of a floor panel of a luggage room, according to the invention.
Fig. 2 is a diagram in plan view, showing the schematic constitution of a luggage room of a vehicle which includes the support structure according to the invention.
Fig. 3 is an enlarged view showing a state of a floor panel when the floor panel is lifted.
Fig. 4 is an enlarged view showing a state where the floor panel starts to be pivoted about a fulcrum from the lifting state.
Fig. 5 is an enlarged view showing a state of an operation to an initial position where the floor panel is flush with a floor surface, from a pivoting operation of the floor panel.
Fig. 6 is an enlarged view showing a modified example of a stopper of a second pin guide groove.
Fig. 7 is an enlarged view showing another mode of guide parts.

### DETAILED DESCRIPTION OF PREFERRED EMBODIMENTS

An embodiment of the invention will be described below with reference to drawings.

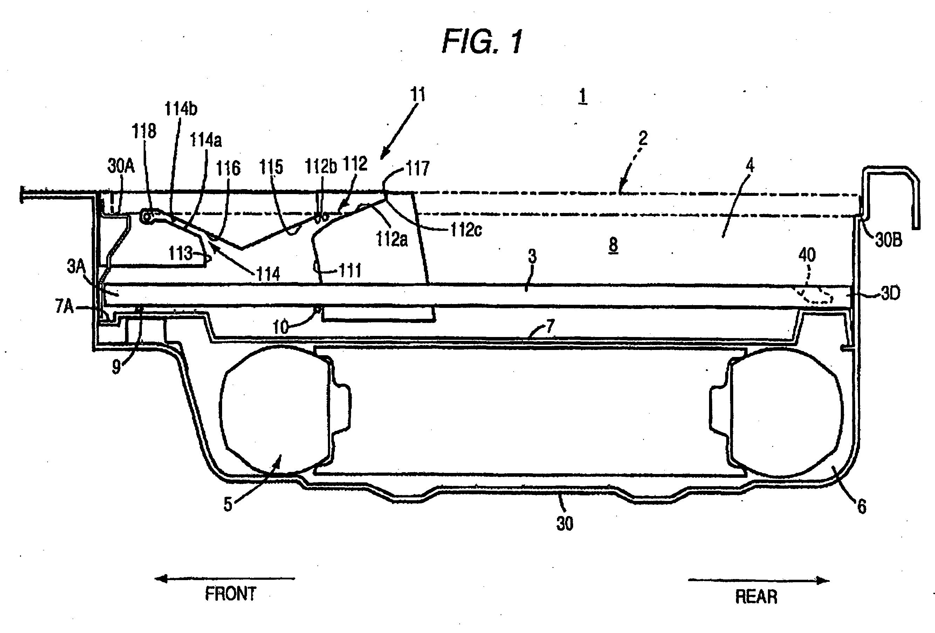

According to a support structure in this embodiment, a floor panel 3 constituting a floor surface 2 of a luggage room 1 located at a rear part of a vehicle can be moved to an upper step position and to a lower step position as shown in Fig. 1. Below the floor surface 2, two steps of portions 4 (hollowed parts 4) hollowed toward the downside of a vehicle body are formed by a surrounding panel 30. A downmost portion of the hollowed part 4 is used as a housing space 6 in which a spare tire is housed. A floor under-tray 7 is arranged on the housing space 6 thereby to form a housing space 8. In the embodiment, the floor under-tray 7 divides the housing space 6 from the housing space 8. At the upper part of the surrounding panel 30, reception parts 30A and 30B are formed, on which a front end 3A which is a vehicle front portion of the floor panel 3 and a rear end 3D which is a vehicle rear portion of the floor panel 3 when the floor panel 3 is positioned in the upper step position, are placed respectively.

This hollowed part 4 is stopped up (covered) by the floor panel 3 retained horizontally in the upper step position which is substantially flush with the floor surface 2 shown by chain double-dashed lines in Fig. 1. Further, the hollowed part 4 is opened when the floor panel 3 is positioned in the lower step position where the floor panel 3 is horizontally placed on the floor under-tray 7, whereby a space can be enlarged. At a leading end of the floor under-tray 7, a step portion 7A is formed, which is lower in level than the placement surface of the floor panel 3.

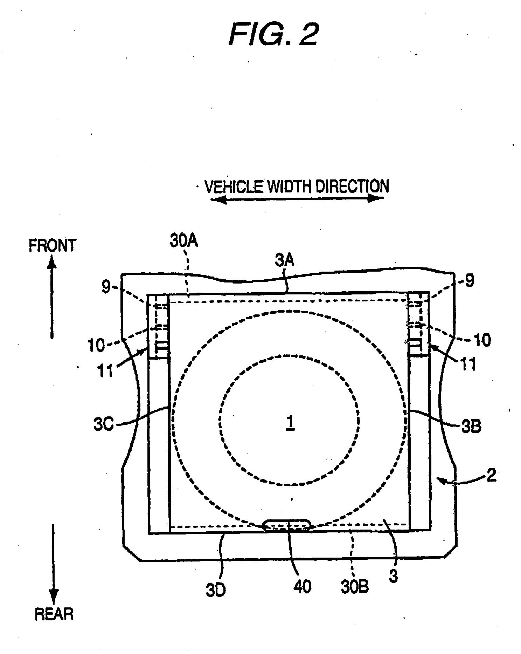

The floor panel 3 has a size at which the floor panel 3 can cover the whole of the hollowed part 4. As shown in Fig. 2, a pair of first pin members 9 and a pair of second pin members 10 which protrude in a width direction of the vehicle are disposed at both side portions 3B, 3C of the floor panel 3 on a leading end 3A thereof. Each pin member 9 and each pin member 10 are spaced in a longitudinal direction of the vehicle (in a front-rear direction). In the embodiment, the first pin members 9 are disposed at vehicle front side, and the second pin members 10 are disposed more rearward than the first pin members 9. At a rear end 3D of the floor panel 3, an operational part 40 for operating the floor panel 3 in a vertical direction (up-down direction) is formed.

Guide parts 11 are respectively provided on side surfaces of the hollowed part 4, which are both side surfaces of the luggage room 1, opposed to each pin member 9, 10. The guide parts 11 are engaged with the pin members 9, 10 thereby to guide the floor panel 3 in the up-down direction. In the embodiment, the first pin members 9 are front-side pins, and the second pin members 10 are rear-side pins.

In the embodiment, the first pin members 9 and the second pin members 10 have the same shape and the same function on the right and the left. The guide parts 11 have the same constitution in side view and the same function. Therefore, using one of the first pin members 9, one of the second pin members 10 and one of the guide parts 11, the constitution and operation of a support mechanism will be described below.

The guide part 11 includes, as shown in Fig. 1, a first guide surface 111, a second pin guide groove 112 (hereinafter described as a "guide groove 112"), a third guide surface 113, a first pin guide groove 114 (hereinafter described as a "guide groove 114"), a fifth guide surface 115, and a sixth guide surface 116. The first guide surface (first guide part) 111 guides the second pin member 10 so that the floor panel 3 can be pivoted from the lower step position below the floor surface 2 about the first pin member 9 or about the vehicle front position which is located more forward than a position at which the first pin member 9 is disposed. The guide groove (second guide part) 112 guides the second pin member 10 guided by the first guide surface 111 toward the rear side of the vehicle. The third guide surface (third guide part) 113, when the second pin member 10 is located at a rear end 112c of the guide groove 112, guides movement of the first pin member 9 so that the floor panel 3 can be pivoted about the second pin member 10. The guide groove (fourth guide part) 114 guides the first pin member 9 guided by the third guide surface 113 toward the front side of the vehicle thereby to locate the floor panel 3 in the upper step position. The fifth guide surface (fifth guide part) 115 regulates the pivoting position of the second pin member 10 guided by the first guide surface 111. The sixth guide surface (sixth guide part) 116 regulates the pivoting position of the first pin member 9 guided by the third guide surface 113.

The guide groove 112 includes a pair of opposed surfaces 112a, 112b to each other, which are continuously connected to the first and fifth guide surfaces 111, 115, respectively. The guide groove 112 is extended toward obliquely upper side and rear side of the vehicle. A side of a rear end 112c of the guide groove 112 opens to the floor surface 2. On the opposed surface 112a, a stopper part 117, which includes a substantially vertical surface, is formed in the vicinity of the rear end 112c. The stopper part 117 regulates the rearward movement of the second pin member 10 in the guide groove 112.

The guide groove 114 includes a pair of opposed surfaces 114a, 114b to each other, which are continuously connected to the third and sixth guide surfaces 113, 116, respectively. At a front end 114c of the guide groove 14, a space part 118 is formed which houses the first pin member 9 therein when the floor panel 3 is positioned the upper step position.

These respective guide surfaces and guide grooves are defined by level differences (steps) provided on the side surfaces of the hollowed part 4.

According to the support mechanism having such the constitution, the first pin members 9 and the second pin members 10 which protrude in the width direction of the vehicle are provided at the side parts 3B, 3C of the leading end 3A of the floor panel 3. The first pin members 9 and the second pin members 10 are spaced in the longitudinal direction of the vehicle. The guide parts 11 are formed on the side surfaces of the hollowed part 4 and are opposed to these pin members 9 and 10. The guide parts 11 are engaged with the respective pin members 9, 10, thereby to guide the floor panel 3 in the up-down direction. The guide parts 11 are enable the movements of the floor panel 3 to the upper step position and to the lower step position. When the operator moves the floor panel 3 while holding the operational part 40 of the floor panel 3, a side of the leading end 3A side of the floor panel 3 is supported by the respective pin members 9 and 10. Accordingly, support stability increases, so that sway in the width direction and in the longitudinal direction canbe reduced. Further, the load of the floor panel 3 can be distributed to the first and second pin members 9 and 10, so that support rigidity can be improved by simple constitution.

Further, since there is no guide member which opens and closes unlike the conventional constitution, there is no fear that operational disadvantage of the opening and closing part occurs. Therefore, though the constitution is simplified, the up-down operation of the floor panel 3 can be smoothly performed by the pivoting and sliding operations of the pin members 9 and 10. Further, since the floor panel 3 can be pivoted upward from the lower step position, the movement amount in the longitudinal direction of the vehicle can be reduced. Therefore, the present invention can be applied not only to the support structure of the floor panel 3 under the floor surface 2 as in this embodiment, but also to a support structure in which the floor panel 3 is set at a position which is more upward than the upper step position of the floor surface 2.

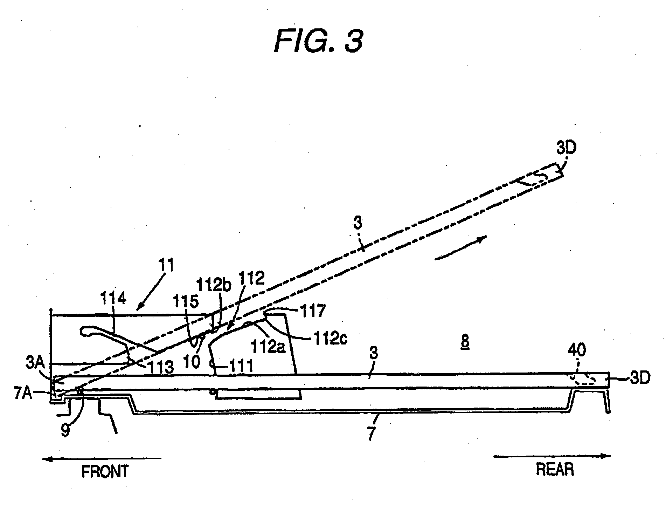

As shown in Fig. 3, when the operator lifts the operational part 40 located at the rear end 3D of the floor panel 3 located in the lower step position which is more downward than the floor surface 2, the floor panel 3, as shown by chain double-dashed lines in Fig. 3, is lifted centered at its leading end 3A. At this time, the second pin member 10 is guided pivotably toward the front side of the vehicle by the first guide surface 111. At the leading end of the floor under-tray 7, the step portion 7A is formed, which is lower in level than the placement surface of the floor panel 3. Therefore, when the floor panel 3 is lifted so as to be pivoted in the forward and upward direction from the lower step position, the leading end 3A enters the inside of the step 7A, so that the position of the leading end 3A, that is, the rising fulcrum position of the floor panel 3 becomes stable, and lifting is smoothly performed.

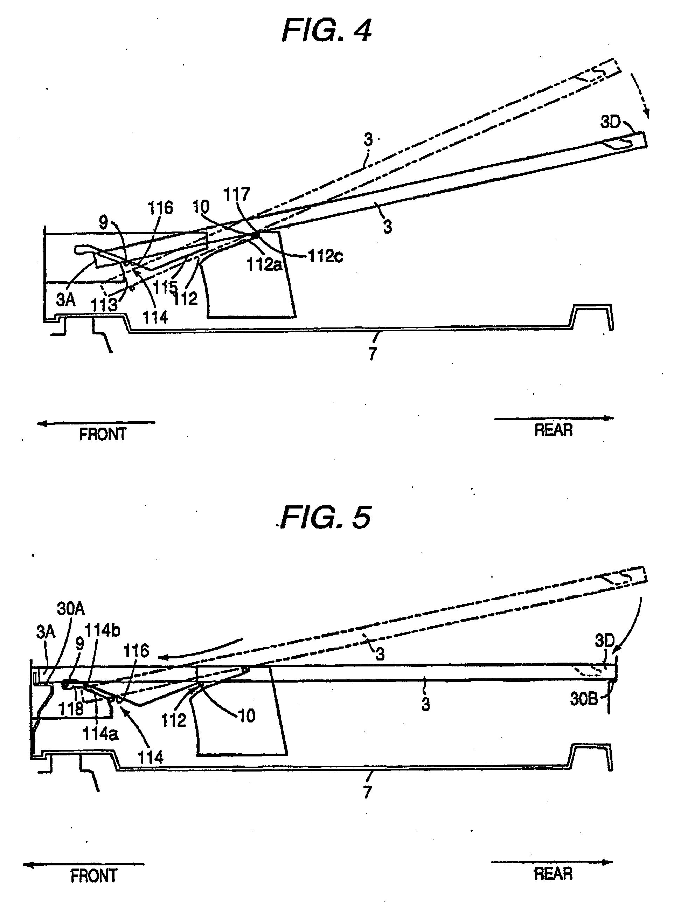

When pivoting in the opening direction of the floor panel 3 proceeds, the second pin member 10 comes into contact with the fifth guide surface 115, whereby pivoting in the opening direction is regulated. By this regulation, the operator changes the pivoting operation of the floor panel 3 in the upward direction, to the moving operation of the floor panel 3 toward the rear side of the vehicle. When the moving direction of the floor panel 3 is changed, the second pin member 10 moves along the fifth guide surface 115, and introduced in the guide groove 112, as shown in Fig. 4. Since the fifth guide surface 115 and the guide groove 112 are continuously connected to each other, the pivoting operation in the upward direction from the lower step position, and the moving operation in the rearward direction are smoothly guided in continuity, whereby the operability can be more heightened.

When the second pin member 10 reaches the rear end 112c of the guide groove 112, it comes into contact with the stopper surface 117 and its movement is stopped. Therefore, the floor panel 3 intends to be pivoted by its weight about the second pin member 10 in a direction in which a side of the rear end 3D is moved down. At this time, since the third guide surface 113 is formed so as to enable the pivoting operation of the floor panel 3 about the second pin member 10, it enables the downward pivoting operation of the floor panel 3 about the second pin member 10 without obstructing the movement of the first pin member 9. Since the third guide surface 113 and the guide groove 114 are continuously connected to each other, the pivoting operation of the floor panel 3 about the second pin member 10, and the moving operation of the floor panel 3 to the upper step position are smoothly guided in continuity, whereby the operability can be more heightened.

When pivoting in the downward direction of the floor panel 3 about the second pin member 10 proceeds, the first pin member 9 comes into contact with the sixth guide surface 116, whereby pivoting in the downward direction of the floor panel 3 about the second pin member 10 is regulated. At this time, since the guide groove 114 and the sixth guide surface 116 are continuously connected to each other, the first pin member 9 can smoothly shift into the guide groove 114, and the moving operation of the floor panel 3 after the pivoting operation about the second pin member 10 can be smoothly performed, whereby the operability can be more heightened.

When the first pin member 9 is guided by the third guide surface 113 to the guide groove 114 which guides the first pin member 9 toward the front side of the vehicle, the floor panel 3 restarts the pivoting operation. When the first pin member 9 is introduced into the guide groove 114 as shown in Fig. 5, by the load of the floor panel 3 which is going down, the firs pin member 9 moves in the guide groove 114 obliquely upward in the forward direction, and the second pin member 10 moves into the guide groove 112 obliquely downward in the forward direction. When the front first pin member 9 reaches the space part 118 located at the leading end of the first pin guide groove 114, the front end 3A and the rear end 3D of the floor panel 3 are placed on the reception parts 30A, 30B, whereby the floor panel 3 is positioned in the upper step position and is kept substantially flush with the floor surface 2.

In the embodiment, since the second guide part 112 is formed in the shape of a groove, it can surely guide the second pin member 10 toward the rear side. Since the fourth guide part 114 is also formed in the shape of a groove, it can surely guide the first pin member 9 toward the front side.

Since the first guide part 111 and the fifth guide part 115 are not formed in the shape of a groove but constituted by only a surface, the side surfaces of the hollowed part 4 are not subjected to more processing than they need, so that processing cost is suppressed. In case that the guide part is constituted not by the groove but by only the surface, the degree of freedom in the second pin member 10 improves. Therefore, the smooth movement is possible, and the side surfaces of the hollowed part 4 are neat and have good appearance.

Since the third guide part 113 and the sixth guide part 116 are not formed in the shape of a groove but constituted by only a surface, the side surfaces of the hollowed part 4 are not subjected to more processing than they need, so that processing cost is suppressed. In case that the guide part is constituted not by the groove but by only the surface, the degree of freedom in the first pin member 9 also improves, and the smooth movement is possible. Further, the side surfaces of the followed part 4 are neat and have good appearance.

Since the first pin member 9 is arranged at the front end 3A side of the floor panel 3, and the operational part 40 is arranged at the rear end 3D side of the floor panel 3, the leading end 3A of the floor panel 3 does not lower downward at more level than it needs in the upward pivoting operation. Further, since the second pin member 10 can be arranged as to the front as possible, the pivoting operation of the floor panel 3 about the second pin member 10 can be performed by small force, utilizing the principle of the lever, so that operability can be more heightened.

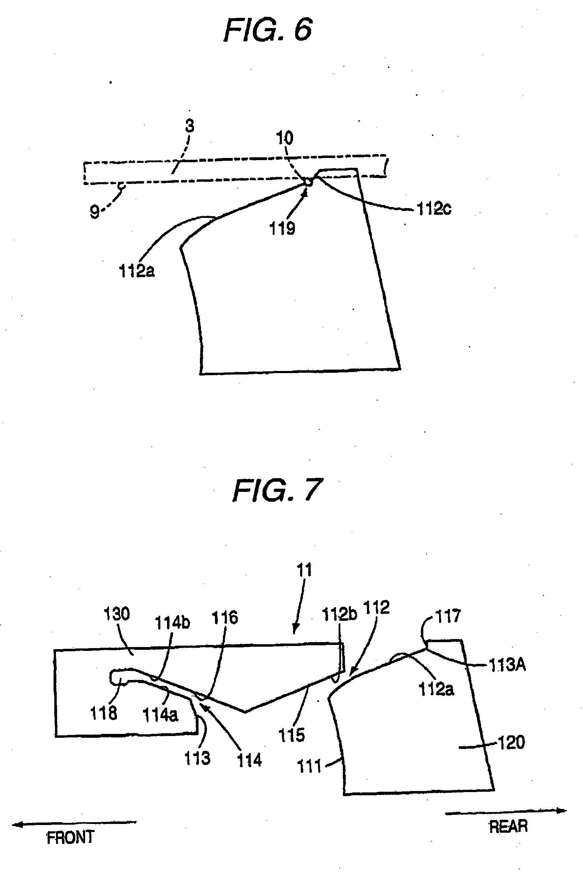

In the above embodiment, though the vertical surface is formed, as the stopper part 117 for regulating the movement of the second pin member 10, on the opposed surface 112a included in the guide groove 112, for example, as shown in Fig. 6, an arcuate step portion 119 may be formed, as a stopper part, near the rear end 112c of the opposed surface 112a.

Though the above each guide surface and each guide groove are formed as the guide part 11 by cutting the side surfaces of the hollowed part 4, a mode as shown in Fig. 7 may be adopted in which each guide surface and each guide groove are formed on two members 120, 130. The members 120, 130 are attached to the side surfaces of the hollowed part 4. Namely, as shown in Fig. 7, the first guide surface 111, the opposed surface 112a, which constitute the guide groove 112, and the stopper surface 117 are formed on the member 120. The opposed surface 112b, which constitute the guide groove 112, the third guide surface 113, the guide groove 114 and the fifth guide surface 115 are formed on the member 130. The members 120, 130 are arranged so that the opposed surface 112a formed on the member 120 and the opposed surface 112b formed on the member 130 are opposed to each other, whereby the guide groove 112 is constituted.

Under such the constitution, even in case that wear of the pin members 9, 10 and each guide surface proceed with their use, and backlash increases, clearance between the pin member 9, 10 and each guide surface or guide groove can be readily adjusted by adjusting the positions of the member 120 and the member 130, so that smooth operability can be kept with time. Further, the worn member of the member 120 and the member 130 may be exchanged.

## Claims

1. A support structure of a floor panel (3) of a luggage room of a vehicle, the support structure for positioning the floor panel in an upper step position and a lower step position, the support structure comprising:
a pair of first pin members (9), protruding from both sides of the floor panel (3) in a width direction of the vehicle;
a pair of second pin members (10), protruding from the sides of the floor panel (3) in the width direction, and disposed at rear side of the first pin members with space; and
guides, respectively formed on both side surfaces of the luggage room which are opposed to the first and second pin members, and adapted to be engaged with at least one of the first pin members (9) and the second pin members (10) thereby to guide the floor panel (3) in a vertical direction, each of the guides including:
a first guide part (111), adapted to guide one of the second pin members (10) so that the floor panel can be pivoted, from the lower step position, about one of the first pin members (9) or about a position located at front side of the one of the first pin members (9);
a second guide part (112), adapted to guide the one of the second pin members guided by the first guide part (111) toward rear side of the vehicle;
a third guide part (113), adapted to guide the one of the first pin members (9), when the one of the second pin members is located at a rear end of the second guide part, so that the floor panel (3) can be pivoted about the one of the second pin members (10);
a fourth guide part (114), adapted to guide the one of the first pin members (9) guided by the third guide part (113) toward front side of the vehicle to arrange the floor panel in the upper step position; **characterised by**
a fifth guide part (115), adapted to regulate a position of the one of the second pin members (10) guided by the first guide part (111) and adapted to guide the one of the second pin members (10); and
a stopper part (117), formed in the vicinity of the rear end of the second guide part (112) and adapted to regulate rearward movement of the one of the second pin members in the second guide part.

2. The support structure according to claim 1, wherein
the second guide part (112) is continuously connected to the fifth guide part and is extended toward rear side and obliquely upper side of the vehicle.

3. The support structure according to claim 1 or claim 2, wherein
each of the guides includes a sixth guide part (116), adapted to regulate a position of the one of the first pin members (9) guided by the third guide part (113), and
the fourth guide part (114) is continuously connected to the sixth guide part.

4. The support structure according to claim 1, wherein
the second guide part (112) is continuously connected to the first guide part.

5. The support structure according to claim 1, wherein
the fourth guide part (114) is continuously connected to the third guide part (113).

6. The support structure according to claim 2, wherein
the second guide part (112) includes a guide groove defined by a pair of surfaces which are continuously connected to the first guide part (111) and the fifth guide part (115), respectively and which are opposed to each other.

7. The support structure according to claim 3, wherein
the fourth guide part (114) includes a guide groove defined by a pair of surfaces which are continuously connected to the third guide part (113) and the sixth guide part, respectively and which are opposed to each other.

8. The support structure according to claim 1, further comprising:
an operational part for moving the floor panel in the vertical direction, disposed at a rear portion of the floor panel (3),
wherein the first pin members (9) are disposed at front portions of the floor panel.

## Patentansprüche

1. Stützstruktur einer Bodenplatte (3) eines Gepäckraums eines Fahrzeugs, wobei die Stützstruktur zum Positionieren der Bodenplatte in einer oberen Stufenposition und einer unteren Stufenposition dient, wobei die Stützstruktur aufweist:
ein Paar erster Stiftelemente (9), die von beiden Seiten der Bodenplatte (3) in eine Breitenrichtung des Fahrzeugs vorstehen;
ein Paar zweiter Stiftelemente (10), die von den Seiten der Bodenplatte (3) in die Breitenrichtung vorstehen und mit einem Abstand auf der Rückseite der ersten Stiftelemente angeordnet sind; und
Führungen, die jeweils auf beiden Seitenflächen des Gepäckraums ausgebildet sind, die den ersten und zweiten Stiftelementen gegenüberliegen und eingerichtet sind, mit mindestens einem der ersten Stiftelemente (9) und der zweiten Stiftelemente (10) in Eingriff gebracht zu werden, um die Bodenplatte (3) in eine vertikale Richtung zu führen, wobei jede der Führungen aufweist:
einen ersten Führungsteil (111), der eingerichtet ist, eines der zweiten Stiftelemente (10) so zu führen, dass die Bodenplatte von der unteren Stufenposition um eines der ersten Stiftelemente (9) oder um eine Position gedreht werden kann, die sich an der Vorderseite des einen der ersten Stiftelemente (9) befindet;
einen zweiten Führungsteil (112) der eingerichtet ist, das eine der zweiten Stiftelemente, das durch den ersten Führungsteil (111) geführt wird, zur Rückseite des Fahrzeugs zu führen;
einen dritten Führungsteil (113), der eingerichtet ist, das eine der ersten Stiftelemente (9), wenn sich das eine der zweiten Stiftelemente an einem hinteren Ende des zweiten Führungsteils befindet, so zu führen, dass die Bodenplatte (3) um das eine der zweiten Stiftelemente (10) gedreht werden kann;
einen vierten Führungsteil (114), der eingerichtet ist, das eine der ersten Stiftelemente (9), das durch den dritten Führungsteil (113) geführt wird, zur Vorderseite des Fahrzeugs zu führen, um die Bodenplatte in der oberen Stufenposition anzuordnen; **gekennzeichnet durch**
einen fünften Führungsteil (115), der eingerichtet ist, eine Position des einen der zweiten Stiftelemente (10) zu regulieren, das **durch** den ersten Führungsteil (111) geführt wird, und eingerichtet ist, das eine der zweiten Stiftelemente (10) zu führen; und
einen Anschlagteil (117), der in der Nähe des hinteren Endes des zweiten Führungsteils (112) ausgebildet und eingerichtet ist, die Rückwärtsbewegung des einen der zweiten Stiftelemente im zweiten Führungsteil zu regulieren.

2. Stützstruktur nach Anspruch 1, wobei
der zweite Führungsteil (112) andauernd mit dem fünften Führungsteil verbunden ist und sich zur Rückseite und schief zur Oberseite des Fahrzeugs erstreckt.

3. Stützstruktur nach Anspruch 1 oder 2, wobei
jede der Führungen einen sechsten Führungsteil (116) aufweist, der eingerichtet ist, eine Position des einen der ersten Stiftelemente (9) zu regulieren, das durch den dritten Führungsteil (113) geführt wird, und
der vierte Führungsteil (114) andauernd mit dem sechsten Führungsteil verbunden ist.

4. Stützstruktur nach Anspruch 1, wobei
der zweite Führungsteil (112) andauernd mit dem ersten Führungsteil verbunden ist.

5. Stützstruktur nach Anspruch 1, wobei
der vierte Führungsteil (114) andauernd mit dem dritten Führungsteil (113) verbunden ist.

6. Stützstruktur nach Anspruch 2, wobei
der zweite Führungsteil (112) eine Führungsnut aufweist, die durch ein Paar Flächen definiert ist, die andauernd mit dem ersten Führungsteil (111) bzw. dem fünften Führungsteil (115) verbunden sind und die einander gegenüberliegen.

7. Stützstruktur nach Anspruch 3, wobei
der vierte Führungsteil (114) eine Führungsnut aufweist, die durch ein Paar Flächen definiert ist, die andauernd mit dem dritten Führungsteil (113) bzw. dem sechsten Führungsteil verbunden sind und die einander gegenüberliegen.

8. Stützstruktur nach Anspruch 1, die ferner aufweist:
einen Bedienungsteil zum Bewegen der Bodenplatte in die vertikale Richtung, der an einem hinteren Abschnitt der Bodenplatte (3) angeordnet ist,
wobei die ersten Stiftelemente (9) an vorderen Abschnitten der Bodenplatte angeordnet sind.

## Revendications

1. Structure de support d'un panneau de plancher (3) d'un coffre de véhicule, ladite structure de support permettant de fixer le panneau de plancher dans une position supérieure et une position inférieure, ladite structure de support comprenant :
une paire de premiers éléments en broche (9) en saillie des deux côtés du panneau de plancher (3) dans le sens de la largeur du véhicule ;
une paire de deuxièmes éléments en broche (10) en saillie des côtés du panneau de plancher (3) dans le sens de la largeur, et disposés avec espacement en arrière des premiers éléments en broche ; et
des guidages, formés sur les deux surfaces latérales du coffre opposées aux premiers et aux deuxièmes éléments en broche, et prévus pour recevoir au moins un des premiers éléments en broche (9) et des deuxièmes éléments en broche (10) pour guider le panneau de plancher (3) en direction verticale, chaque guidage comprenant :
une première partie de guidage (111), prévue pour guider un des deuxièmes éléments en broche (10) de manière à permettre le pivotement du panneau de plancher depuis la position inférieure, autour d'un des premiers éléments en broche (9) ou autour d'un emplacement situé à l'avant ledit un des premiers éléments en broche (9) ;
une deuxième partie de guidage (112) prévue pour guider vers l'arrière du véhicule ledit un des deuxièmes éléments en broche guidé par la première partie de guidage (111) ;
une troisième partie de guidage (113), prévue pour guider ledit un des premiers éléments en broche (9) quand le dit un des deuxièmes éléments en broche est situé à une extrémité arrière de la deuxième partie de guidage, de manière à permettre le pivotement du panneau de plancher (3) autour dudit un des deuxièmes éléments en broche (10) ;
une quatrième partie de guidage (114) prévue pour guider vers l'avant du véhicule ledit un des premiers éléments en broche (9) guidé par la troisième partie de guidage (113) pour amener le panneau de plancher en position supérieure ; **caractérisé par**
une cinquième partie de guidage (115) prévue pour le réglage d'une position dudit un des deuxièmes éléments en broche (10) guidé par la première partie de guidage (111) et prévue pour guider ledit un des deuxièmes éléments en broche (10) ; et une partie d'arrêt (117) formée à proximité de l'extrémité arrière de la deuxième partie de guidage (112) et prévue pour le réglage du déplacement vers l'arrière dudit un des deuxièmes éléments en broche dans la deuxième partie de guidage.

2. Structure de support selon la revendication 1, où
la deuxième partie de guidage (112) est raccordée de manière continue à la cinquième partie de guidage et s'étend vers l'arrière et obliquement vers le haut du véhicule.

3. Structure de support selon la revendication 1 ou la revendication 2, où
chaque guidage comprend une sixième partie de guidage (116) prévue pour le réglage d'une position dudit un des premiers éléments en broche (9) guidé par la troisième partie de guidage (113), et où
la quatrième partie de guidage (114) est raccordée de manière continue à la sixième partie de guidage.

4. Structure de support selon la revendication 1, où
la deuxième partie de guidage (112) est raccordée de manière continue à la première partie de guidage.

5. Structure de support selon la revendication 1, où
la quatrième partie de guidage (114) est raccordée de manière continue à la troisième partie de guidage (113).

6. Structure de support selon la revendication 2, où la deuxième partie de guidage (112) comprend une rainure de guidage définie par une paire de surfaces raccordées de manière continue respectivement à la première partie de guidage (111) et à la cinquième partie de guidage (115), et opposées l'une à l'autre.

7. Structure de support selon la revendication 3, où
la quatrième partie de guidage (114) comprend une rainure de guidage définie par une paire de surfaces raccordées de manière continue respectivement à la troisième partie de guidage (113) et à la sixième partie de guidage, et opposées l'une à l'autre.

8. Structure de support selon la revendication 1, comprenant en outre :
une partie fonctionnelle pour le déplacement du panneau de plancher dans la direction verticale, disposée sur une partie arrière du panneau de plancher (3),
les premiers éléments en broche (9) étant disposés sur des parties avant du panneau de plancher.
